# EUROPEAN PATENT APPLICATION

(11) **EP 3 937 370 A1**
(43) Date of publication of application: **12.01.2022**
(21) Application number: 21382419.6
(22) Date of filing: 07.05.2021
(51) Int. Cl.: H02S 20/32, F24S 30/20

(54) **PHOTOVOLTAIC SOLAR TRACKER WITH OPTIMIZED WEAR AND SYNCHRONOUS TRANSMISSION**

(71) Applicant: Soltec Innovations, S.L., 30500 Molina de Segura (ES)
(72) Inventor: Maldonado Nicolás, Juan José, 30500 Molina de Segura (ES); Sandoval Solano, Salvador, 30500 Molina de Segura (ES); Mira Pérez, Jorge, 30500 Molina de Segura (ES); Carpio Obré, Javier, 30500 Molina de Segura (ES)
(74) Representative: Isern Patentes y Marcas S.L.

(57) **Abstract**

The tracker (25) comprises: torque structure (1, 28); slewing drive (2, 30), with output shaft (5), and engaging device(s) (11) coaxially mounted on output shaft (5); and rotation device (9, 31), attached to torque structure (1, 28), and provided with teeth (17) engaging with engaging device(s) (11). Engaging device (11) comprises: opposing plates (12), interconnected by connections (12, 13); and rollers (16) mounted on connections (12, 13), with free coaxial rotation, for engaging with teeth (17). A solar facility comprises: the driver tracker (25); driven trackers (26, 27); and connection device(s) (32, 33), rotating driven trackers (26, 27) from driver tracker (25). Trackers (25, 26, 27) comprise two cranks (34), attached to torque structure (1,28). Rotation device (31) comprises toothed wheels (9, 36), attached to torque structure (1, 28) and actuated by slewing drive (2, 30). Connection device (32, 33) comprises transmission structure (38) pivotally connected to cranks (34), and comprising facing profiles (39, 40).

## Description

### Technical field of the invention

The present invention may be included within the technical field of solar energy. In particular, the object of the invention relates to a photovoltaic solar tracker configured so as to optimized wear and a solar facility comprising a set of solar trackers provided with synchronous transmission.

### Background of the invention

Solar trackers are known comprising a torque structure, such as a torque tube, for providing solar-tracking rotation to one or several solar panels. The solar trackers also comprise a motor and a slewing drive for actuating the rotation of the torque structure.

Several kinds of slewing drives are known, such as those called "gearbox", for instance: worm-gear gearboxes or epicyclic gearboxes, among other. For engaging with the torque structure, in particular with a toothed element actuating the rotation of the torque structure, such slewing drives comprise toothed wheels referred to as "pinion gears".

Furthermore, solar facilities are known comprising a plurality of solar trackers moving synchronously. In some facilities, there is one of the solar trackers, related to as "driver tracker" which solar-tracking rotation is actuated by a motor, and there are one or several solar trackers, related to as "driven trackers", which are connected to the driver tracker, for synchronously rotating all solar tracker with one single motor. Some facilities use bars, with or without joints (such as cardans) for connecting the driver tracker to the driven trackers.

### Summarized description of the invention

The present invention provides a photovoltaic solar tracker featuring optimized wear of components, according to claim 1, as well as a photovoltaic solar facility optimizing the movement of several solar trackers synchronously with a single motorization and a system of cranks, according to claim 13.

According to the present invention, the solar trackers of the facility may be moved in at least two rows in a synchronized and simultaneous manner. To that end, the facility comprises one driver tracker and one or several driven trackers.

### Brief description of the drawings

All preceding, as well as other, features and advantages, shall be better understood in the light of the following detailed description of preferred embodiments of the invention, with reference to the attached drawings, which are to be considered for illustrative, non-limiting purposes, and wherein:
- Figure 1 shows a detailed perspective view of a tracker of the first aspect of the invention.
- Figure 2 shows a detailed perspective view of the engaging device in figure 1.
- Figure 3 shows a detailed perspective view of the tracking wheel in figure 1.
- Figure 4 shows a perspective view of an alternative solution to that in figures 1-3 for supporting the torque structure on the main pillar of the tracker.
- Figure 5 shows a detailed perspective view of the height adjustment device in figure 1.
- Figure 6 shows a perspective view of a facility according to the second aspect of invention.
- Figure 7 shows a detailed perspective view of a length adjustment device comprising threaded shafts and nut-locking.
- Figures 8-10 shows detailed perspective views of different connection devices.
- Figure 11 shows a side view of a solar facility according to the second aspect of the invention.
- Figure 12 shows a perspective view of a transmission structure comprising one single bar connected to two toothed wheels.
- Figure 13 shows a perspective view of an alternative length-adjusting device comprising telescopic profiles.

### Detailed description of a preferred embodiment of the invention

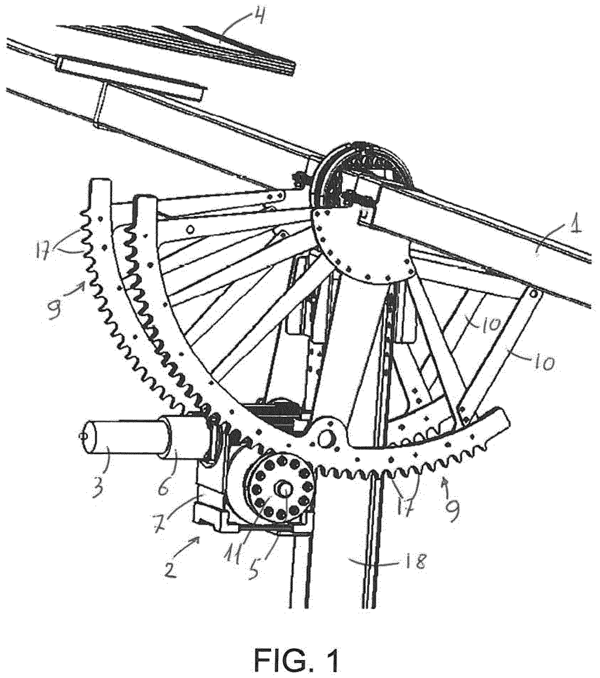

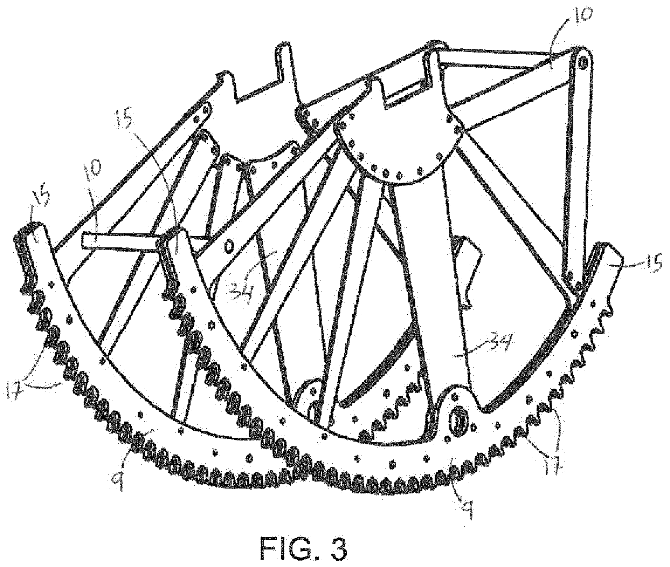

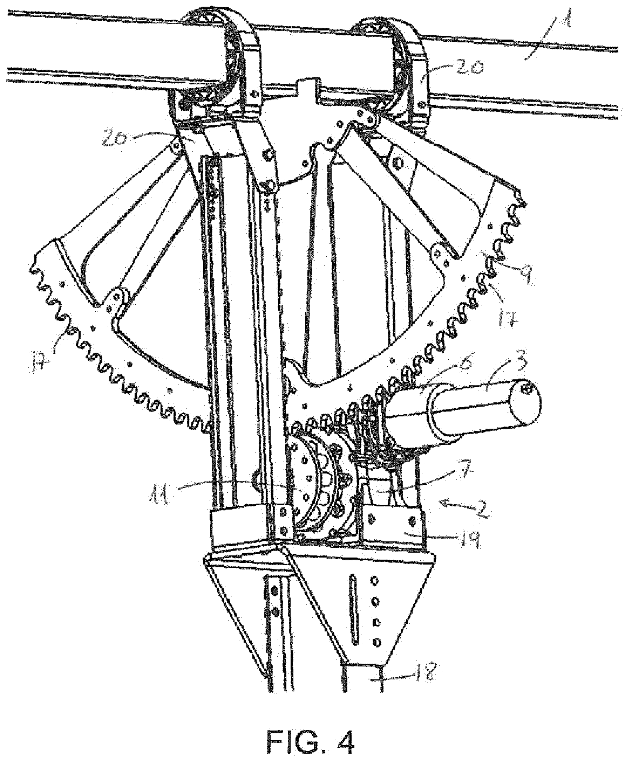

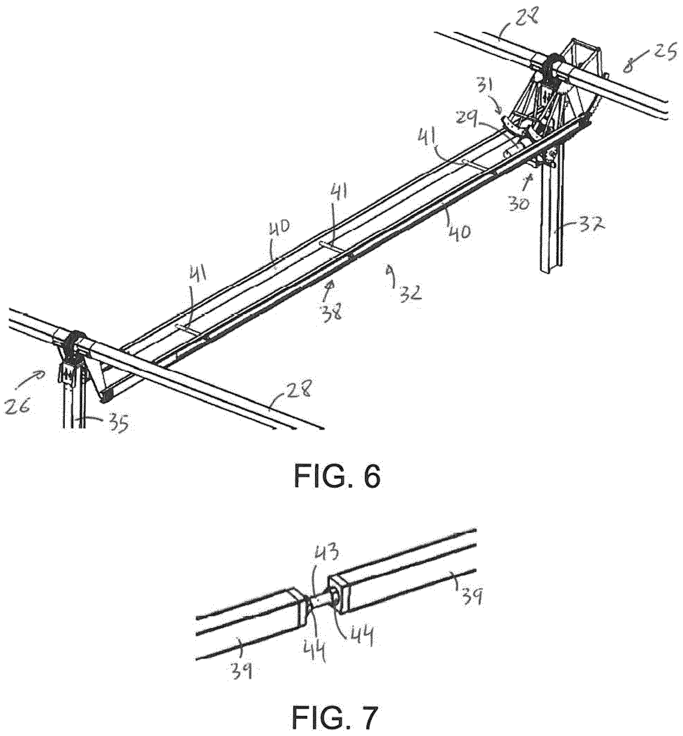

Next, a detailed description of preferred embodiments of the invention is provided with the help of above-mentioned figures 1-13.

In a first aspect, the invention relates to a photovoltaic solar tracker (25), for supporting photovoltaic modules (4), with optimized wear. The tracker (25) of the invention comprises a torque structure (1), such as a torque tube (1), and a slewing drive (2). The tracker (25) also comprises a motor (3), for example a direct current (DC) motor (3), with an input shaft (not shown), for actuating the slewing drive (2). The slewing drive (2) comprises an output shaft (5). The slewing drive (2) may be configured according to any solution as known in the prior art. In particular, the slewing drive (2) may comprise one or several gearboxes (6, 7), such as an epicyclic gearbox (6) or a worm-gear gearbox (7). In the preferred embodiment shown in the figures, the slewing drive (2) comprises an epicyclic gearbox (6), connected to the input shaft of the motor (3), and a worm-gear gearbox (7), actuated by the epicyclic gearbox (6). In this embodiment, a gear (not shown) of the worm-gear gearbox (7) is coaxial to the output shaft (5). As explained above, in this embodiment, the motor (3) is connected first to the epicyclic gearbox (6), which in turn is connected to the worm-gear gearbox (7). As a consequence, a larger demultiplication, as well as a torque capable of moving the tracker (25) is obtained. Furthermore, worm-gear gearboxes (7) are considered irreversible, i.e., they act as an embedment, so as to withstand the torque generated by wind.

The tracker (25) additionally comprises at least one tracking wheel (9), for instance, in the shape of a sprocket, attached to the torque structure (1). Preferably, two facing-to-each-other, parallel tracking wheels (9) are mounted to the torque structure (1). Also preferably, as depicted in the figures, the tracking wheel(s) (9) are not complete, but only segments, so as to make the tracking wheel(s) (9) easier to handle, since only the part of the tracking wheel(s) (9) which are necessary for tracking are included in the segments.

The tracking wheel(s) (9) may further comprise at least one mechanical stop (10), preferably two mechanical stops (10), protruding from the ends of the segments of the tracking wheel(s) (9), for contacting a stop element, for instance, a main pillar (18) of the tracker (25), and therefore avoiding excess rotation of the torque structure (1), for the purpose of avoiding damage to the modules (4) in case of controller breakdown. Additionally, or alternatively, the tracking wheel(s) (9) may comprise decoupling means at the end of the segments of the tracking wheels (9), comprising flat, non-toothed portions (15) for preventing forwards rotation but allowing backwards rotation of the tracking wheel(s) (9).

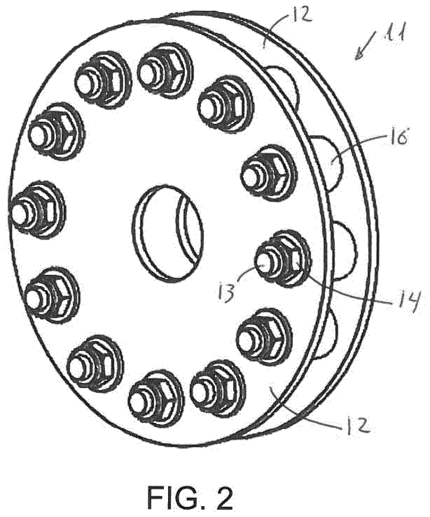

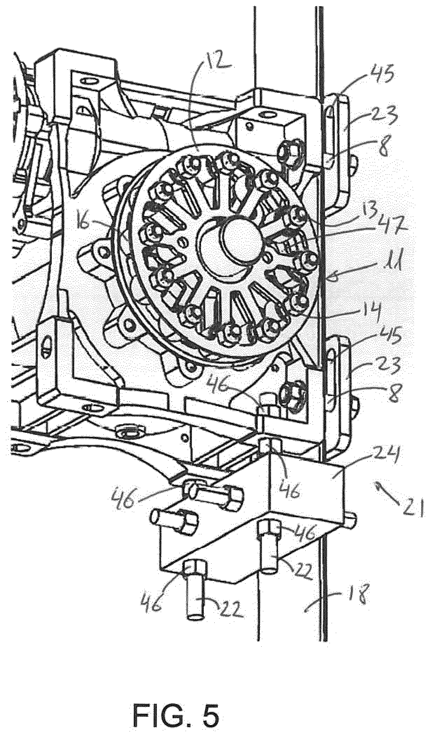

The tracking wheel(s) (9) are connected to the output shaft (5), for producing tracking rotation of the torque structure (1), by means of engaging device(s) (11) coaxially mounted on the output shaft (5), and making part of the slewing drive (2). Each engaging device (11) is therefore to engage with one corresponding of the tracking wheels (9). Furthermore, each engaging device (11) comprises a pair of coaxial, opposing plates (12). The plates (12) are connected to each other, whether permanently or separably, by longitudinal connections (13, 14) so as to keep the plates (12) distanced to each other. As a way of example, as shown in the figures, the plates (12) may be peripherally perforated so as to be connected by the longitudinal connections (13, 14) such as pins (13), bolts, or the like and corresponding nuts (14), rivets or similar. The plates (12) may be solid, see figure 2, although preferably the plates (12) are emptied (47), see figure 5, for reducing weight and use of material. Between the plates (12), rollers (16) are mounted. The rollers (16) are coaxially mounted on the connections (13, 14) with free coaxial rotation. Each tracking wheel (9) has teeth (17) for engaging with the rollers (16) of the corresponding engaging device (11). The engaging device (11) serves both for transmitting rotation to the torque structure (1) and for acting as an additional stage of demultiplication.

The free rotation of the rollers (16), emulating a chain transmission system, distinguishes the invention with respect to the prior art in the following:
- Avoiding direct friction between metals as would in a common pinion-crown system without lubrication, which would result in wear and even seizing. In the present invention, the free rollers (16), in combination with the sprocket-shaped tracking wheel (9), behave a similar way as a chain-sprocket system.
- Providing a simplified manufacturing: First, less quality of mounting is required when mounting the rollers (16) when mounted on the engaging device (11) with respect to when mounted on the tracking wheel (9). Secondly, the involved parts are smaller, so that they may be handled by hand by humans without need for auxiliary transport and lifting elements, thereby offering a compact and constructively simple solution.

The slewing drive (2), in addition to providing tracking rotation to the torque structure (1), may have the function of being able to withstand reverse torque generated by action of wind on the tracker (25). Therefore, as explained above, when the slewing drive (2) comprises a worm-gear gearbox (7), said worm-gear gearbox (7) is mounted on a main pillar (18), so that the main pillar (18), together with the worm-gear gearbox (7), provide an embedment for absorbing wind loads. For example, the worm-gear gearbox (7) may be connected by means of a bracket (19) bolted to the main pillar (18).

Also, or alternatively, there may be two tracking wheels (9), and therefore two engaging devices (11), mounted on opposite ends of the output shaft (5). In case of using a main pillar (18) with a worm-gear gearbox (7), each of the engaging devices (11), and each of the tracking wheels (9), is located on one side of the main pillar (18). This solution allows for the wind load generated is symmetrically distributed over the main pillar (18), achieving a better transmission of the drive and withstanding loads, and therefore avoiding rotation of the main pillar (18). An alternative solution considers only one engaging device (11) and only one corresponding tracking wheel (9), both mounted in a centered position with respect to the main pillar (18), wherein the torque structure (1) is supported by the main pillar (18) by means of a dual support having one member (20) on each side of the main pillar (18). Both solutions avoid asymmetrical stress due to wind loads and therefore rotation of the main pillar (18).

Preferably, the slewing drive (2), together with the motor (3), are mounted to the main pillar (18) by means of a height regulating device (21) which allows to vertically vary the height of the slewing drive (2), for better engaging the engaging devices (11) to the tracking wheels (9). The height regulating device (21) may comprise, as shown in figure 5: a support (24) attached to the main pillar (18); at least one bracket (23), figure 5 shows two brackets (23), connected to the main pillar (18), for example by means of first bolts (8) so as to be displaceable along the main pillar (18), for instance through grooves (45); and threaded second bolts (22), connecting the brackets (23) to the support (24) for adjusting relative distance by means of adjusting nuts (46).

In a second aspect, the invention relates to a solar facility comprising a plurality of photovoltaic solar trackers (25, 26, 27), in particular one driver tracker (25), and one or several driven trackers (26, 27) which are driven by the driver tracker (25). Each one of the trackers (25, 26, 27) comprise a torque structure (28), such as a torque tube (28). The driver tracker (25) further comprises a motor (29), a slewing drive (30), and a rotation device (31) attached to the torque structure (28) and connected to the slewing drive (30), for transmitting rotation from the motor (29) to the torque structure (28).

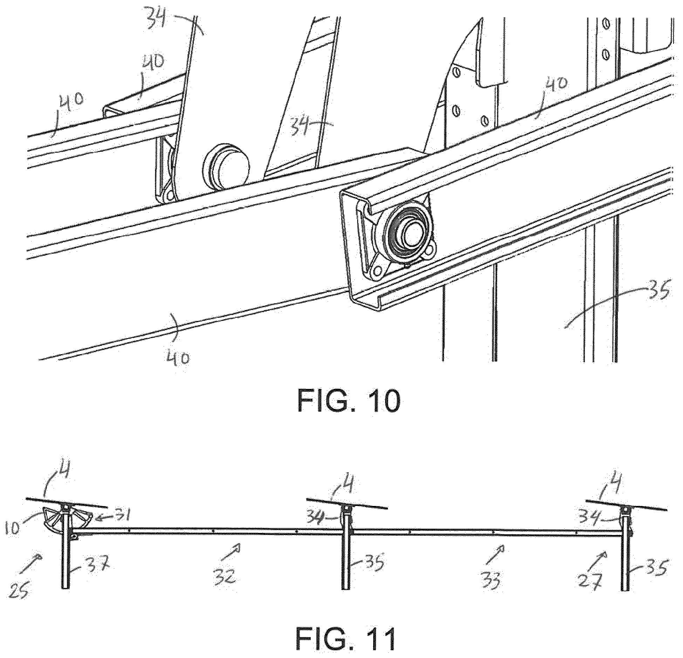

The solar facility of the second aspect comprises at least one elongated connection device (32, 33) for transmitting tracking rotation from the driver tracker (25) to the driven trackers (26, 27), as described below. The invention applies for different configurations of the facility: The driver tracker (25) may be on one end of the facility, so that there is one or several driven trackers (26, 27), all of them on one same side of the driver tracker (25); alternatively, the driver tracker (25) may have one or several driven trackers (26, 27) on each side. In the light of the above, the invention provides for the connection devices (32, 33) comprising: at least one first connection device (32) for connecting the driver tracker (25) to first driven trackers (26) immediately adjacent to the driver tracker (25); and at least one second connection device (33) for connecting the first driven trackers (26) to second driven trackers (27) which are located further from the driver tracker (25), see figure 11.

The trackers (25, 26, 27) comprise at least one crank (34), attached to the torque structure (28). Two cranks (34) are preferred so that both the motor load and resistant load are symmetrical with respect to a main pillar (37) of the driver tracker (25) and a main pillar (35) of the driven trackers (26, 27), thereby achieving a better transmission of the loads. For the driver tracker (25), the cranks (34) may be integrated as part of the rotation device (31).

The rotation device (31) comprises at least one toothed wheel (36), attached to the torque structure (28) and actuated by the slewing drive (30) for providing solar tracking to the torque structure (28). The toothed wheels (36) are preferably on both sides of a main pillar (37) of the driver tracker (25). The first connection device (32) is pivotally connected, on each end, to the cranks (34) of the driver tracker (25) and, on the opposite end, also pivotally connected to the cranks (34) of at least one of the driven trackers (26, 27), so that tracking rotation of the driver tracker (25) is synchronously transmitted to the driven tracker (26, 27). The second connection device (33) is pivotally connected, on both sides, to the corresponding cranks (34) of two consecutive driven trackers (26, 27). The driven trackers (26, 27) preferably comprise two cranks (34), one on each side of the main pilar (35). The driver tracker (25) may comprise two cranks (34), one on each side of the main pillar (37), or may comprise only one crank (34) as explained below.

Each connection device (32, 33) comprises an elongated transmission structure (38) which is pivotally connected, as explained above, to the cranks (34) and / or to the toothed wheels (36) of the rotation device (31). The transmission structure (38) works so as to withstand mainly tension and compression axial force, during a tracking cycle. The transmission structure (38) is comprised by at least one profile (39, 40), preferably a couple of facing profiles (39, 40), preferably commercial profiles (39, 40), wherein the profiles (39, 40) may be closed profiles (39), such as bars (39), preferably square tubes (39), or open profiles (40), such as, for instance, C-profiles (40). If the transmission structure (38) comprises two facing profiles (39, 40), the profiles (39, 40) may be joined by transversal reinforcements (41).

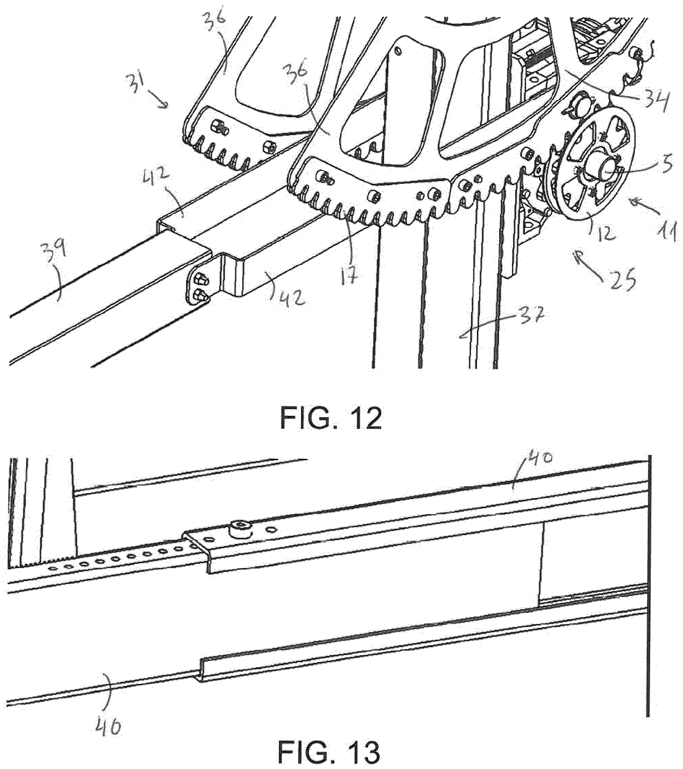

Several solutions may be taken into account for connecting the transmission structure (38) to the cranks (34). Some examples are explained below. The connections must allow pivoting, by any means known in the state of the art, such as pins, rivets, etc.
1.- The driver tracker (25) may include one single toothed wheel (36), for instance when the torque structure (1) is supported by the main pillar (35) by means of the dual support having one member (20) on each side of the main pillar (35), as explained above. In this case, one single profile (39), preferably one closed profile (39), for the transmission structure (38), may be sufficient.
2.- The driver tracker (25) may include two toothed wheels (36), one on each side of the main pillar (35).
   2.1.- The transmission structure (38) may comprise two facing profiles (39, 40), one for being connected to the crank (34) of the corresponding toothed wheels (36).
   2.2.- The transmission structure (38) may comprise one single profile (39, 40). In this case, as shown in figure 12, two additional connectors (41), on each side of the transmission structure, may be used for being pivotably connected to corresponding cranks (34) of the toothed wheels (36) on both sides of the main pillar (35).

The connection devices (32, 33) may further include, both in the case of closed (39) and open (40) profiles, a length-adjustment device, mounted on the transmission structures (38), for regulating the length of the transmission structure (38), so as to absorb tolerances of separation between trackers (25, 26, 27) as well as differences in ground height, provided that the height differences do not interfere with the profiles (39, 40), and also tolerances of inclinations in a lateral plane between trackers (25, 26, 27). The length-adjustment device may provide continuous adjustment, such as comprising threaded shafts (43) and nut-locking (44); of discrete adjustment, such as for example, replacing each profile (39, 40), whether closed (39) or open (40), for a set, preferably a couple, of telescopic profiles (39, 40), as shown on figure 13. This case is applicable to both situations, as explained above, wherein the transmission structure (38) comprises one single profile (39, 40) or two profiles (39, 40).

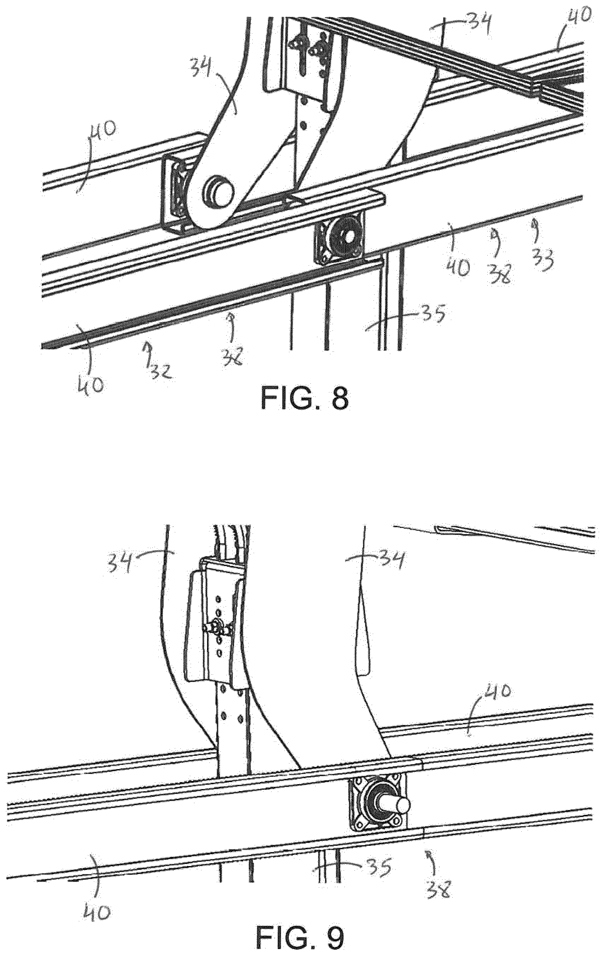

The configuration of the transmission structures (38) may slightly vary according to ground unevenness. If ground is even, or if unevenness is uniform, the transmission structure (38) preferably comprises only one pair of longer profiles (39, 40), as shown on figure 9 for connecting more than two consecutive trackers (25, 26, 27). On the contrary, when the unevenness is not uniform, see figures 8 and 10, the transmission structure (38) may comprise one pair of shorter profiles (39, 40) for each couple of consecutive trackers (25, 26, 27). In the particular case that there is unevenness also along the East-West direction, see figure 10, the profiles (39, 40) of one transmission structure (38) may not be parallel to those of the adjacent transmission structure (38).

In one preferred embodiment, the driver tracker (25) corresponds to the solar tracker (25) with optimized wear according to the first aspect described above. Therefore, all features of the solar tracker (25) of the first aspect above apply to the driver tracker (25). In particular, so as to better illustrate the embodiment, the torque structure (28) is equivalent to the torque structure (1), as well as the motor (29), the slewing drive (30) and the rotation device (31) respectively correspond to the motor (3), the slewing drive (2) and the tracking wheels (9).

## Claims

1. Photovoltaic solar tracker (25), comprising:
- a torque structure (1);
- a slewing drive (2), with an output shaft (5), and at least one engaging device (11) coaxially mounted on the output shaft (5); and
- a motor (3), with an input shaft, for actuating the slewing drive (2);
the tracker (25) being **characterized by** further comprising at least one tracking wheel (9), attached to the torque structure (1), and provided with teeth (17) so as to engage with a corresponding one of the at least one engaging device (11) for producing tracking rotation of the torque structure (1);
wherein each engaging device (11) comprises:
- a pair of coaxial, opposing plates (12), connected to each other, by means of longitudinal connections (13, 14) so as to keep the plates (12) distanced to each other; and
- rollers (16) coaxially mounted on the connections (13, 14) between the plates (12), with free coaxial rotation, for engaging with the teeth (17) of the corresponding tracking wheel (9).

2. Photovoltaic solar tracker (25) according to claim 1, wherein the at least one tracking wheel (9) is in the shape of a sprocket.

3. Photovoltaic solar tracker (25) according to anyone of claims 1-2, wherein the tracking wheels(s) (9) are not complete but segments, the tracker (25) further comprising:
- at least one mechanical stop (10), protruding from at least one end of the segments of the tracking wheel(s) (9), for contacting a stop element of the tracker (25), so as to avoid excess rotation of the torque structure (1), for avoiding damage to the modules (4) in case of controller breakdown; and / or
- decoupling means at the end of at least one end of the segments of the tracking wheels(s) (9), comprising flat, non-toothed portions (15) for preventing forwards rotation while allowing backwards rotation of the tracking wheel(s) (9).

4. Photovoltaic solar tracker (25) according to anyone of claims 1-3, wherein the slewing drive (2) comprises a worm-gear gearbox (7) with a gear which is coaxial to the output shaft (5).

5. Photovoltaic solar tracker (25) according to claim 4, further comprising a main pillar (18) whereon the worm-gear gearbox (7) is mounted, so that the main pillar (18), together with the worm-gear gearbox (7), provide an embedment for absorbing wind loads.

6. Photovoltaic solar tracker (25) according to anyone of claims 4-5, wherein one engaging device (11) and one corresponding tracking wheel (9), are mounted in a centered position with respect to the main pillar (18), wherein the torque structure (1) is supported by the main pillar (18) by means of a dual support having one member (20) on each side of the main pillar (18).

7. Photovoltaic solar tracker (25) according to anyone of claims 1-6, comprising two, facing-to-each-other, parallel tracking wheels (9), mounted to the torque structure (1).

8. Photovoltaic solar tracker (25) according to claim 7, comprising two engaging devices (11), mounted on opposite ends of the output shaft (5), for engaging each with the corresponding tracking wheel (9).

9. Photovoltaic solar tracker (25) according to claims 5 and 8, wherein, each of the engaging devices (11), and each of the tracking wheels (9), is located on one side of the main pillar (18).

10. Photovoltaic solar tracker (25) according to anyone of claims 5-19, further comprising a height regulating device, for mounting the slewing drive (2), together with the motor (3), to the main pillar (18), and for allowing to vertically vary the height of the slewing drive (2), for adjusting engagement of the engaging devices (11) to the tracking wheels (9).

11. Photovoltaic solar tracker (25) according to claim 10, wherein the height regulating device (21) comprises:
- a support (24) attached to the main pillar (18);
- at least one bracket (23), connected to the main pillar (18), so as to be displaceable along the main pillar (18); and
- threaded second bolts (22), connecting the brackets (23) to the support (24) for adjusting relative distance by means of adjusting nuts (46).

12. Photovoltaic solar facility, comprising:
- the driver tracker (25), according to anyone of claims 1-11, comprising motor (3, 29), slewing drive (2, 30), and rotation device (9, 31);
- at least one driven tracker (26, 27), driven by the driver tracker (25);
- a torque structure (1, 28), mounted on each of the trackers (25, 26, 27), and attached to the rotation device (9, 31), for transmitting rotation from the motor (3, 29) to the torque structure (1, 28);
the facility being **characterized by** further comprising at least one elongated connection device (32, 33), transmitting rotation from the driver tracker (25) to the driven trackers (26, 27);
wherein each one of the trackers (25, 26, 27) comprises at least one crank (34), attached to the torque structure (1,28);
the rotation device (9, 31) further comprising at least one toothed wheel (36), attached to the torque structure (1, 28) and actuated by the slewing drive (2, 30) for providing solar tracking to the torque structure (1, 28);
each connection device (32, 33) comprising an elongated transmission structure (38) pivotally connected, to the crank(s) (34), wherein the transmission structure (38) is comprised by at least one profiles (39, 40).

13. Photovoltaic solar facility according to claim 12, wherein the driver tracker (25) comprises two toothed wheels (36); the transmission structure (38) comprising one single profile (39, 40); further comprising two additional connectors (41), on each side of the transmission structure (38), for being pivotably connecting to the corresponding cranks (34) of the toothed wheels (36).

14. Photovoltaic solar facility according to claim 13, wherein the driver tracker (25) comprises two toothed wheels (36); the transmission structure (38) comprising two profiles (39, 40), one on each side of the main pillar (37).

15. Photovoltaic solar facility according to anyone of claims 13-14, wherein the connection devices (32, 33) further comprise a length-adjustment device mounted on the transmission structures (38), for regulating the length of the transmission structure (38):
- for providing continuous adjustment, such as comprising threaded shafts (43) and nut-locking (44); or
- for providing discrete adjustment, such as for example, replacing each profile (39, 40), by telescopic profiles (39, 40).
